# EUROPEAN PATENT APPLICATION

(11) **EP 3 597 336 A1**
(43) Date of publication of application: **22.01.2020**
(21) Application number: 19187259.7
(22) Date of filing: 19.07.2019
(51) Int. Cl.: B23B 31/107, B23B 31/117, B23B 31/20, B23B 31/30

(54) **TOOL HOLDER DEVICE**

(30) Priority: 20.07.2018 IT 201800007361
(71) Applicant: Prealpina S.r.l., 31015 Conegliano (Treviso) (IT)
(72) Inventor: ONGARO, GIOVANNI, 33077 SACILE (PORDENONE) (IT)
(74) Representative: Forattini, Amelia

(57) **Abstract**

A tool holder device (1), including a chuck (2) which has a first end provided with an attachment member (3), for fixing to a machine tool, and a second end including an axial seat (5) adapted to receive a shank (6) of a tool (7); the chuck has radial holes (8) at the axial seat (5); the radial holes (8) are adapted to receive respective clamping screws (9); the radial holes (8) are through holes and are in communication with the axial seat (5), so that the clamping screws (9) can be tightened on the shank (6) of the tool (7) inserted in the axial seat (5); a part of the second end of the chuck (2) directed toward the tool (7) includes a clamp structure (12) adapted to clamp the shank (6) of the tool (7). The clamp structure can be an elastic clamp structure (112), a structure (12) with jaws with high fastening force and with a roller cage, a structure (212) with hydraulic clamping. The device according to the present invention combines the advantages of systems with a cylindrical attachment member and of clamp system with high clamping torque in a single compact structure and offers locking precision, high clamping force, resistance to axial forces, balancing.

## Description

The present invention relates to a tool holder device.

As is known, the tool holder or tool chuck is an object that allows to interface and connect the cutting tool, such as a milling cutter or a bit, to a machine tool.

The chuck is composed of a rear attachment part, which is built according to DIN and ISO shapes and standards, is inserted axially in the machine tool and allows its locking.

The front part has the function of locking the tool; in the case of integral tools it has a perforated part where it is possible to insert the tool shank.

The methods with which the tool is locked and rendered integral with the chuck are various.

Among the most common on the market there are cylindrical attachment chucks and clamp chucks with high clamping torque.

In the case of cylindrical attachment chucks (Weldon, Whistle notch), locking of the tool is obtained by means of one or two radial screws. The system is very effective as regards resistance to the axial forces that can lead to the extraction of the tool and tool rotation resistance.

However, this system has the disadvantage of being scarcely precise, since the radial action inevitably tends to modify the rotation axis and is very unbalanced due to the presence of the screws and of the surface formed on the circumference of the tool shank in order to allow the screw to move into resting contact.

As regards clamp chucks with high clamping torque, the tool is locked by means of a mechanical action transmitted by a roller or ball cage, which deforms the tool holder bushing, generating particularly high clamping torques.

The above system has the advantage of providing a strong clamping force together with excellent locking precision, because the forces are distributed radially in an even manner. also, the system is symmetrical and therefore well balanced.

Disadvantages of the above described system include generally very bulky dimensions, because the larger and thicker is the internal bushing, the higher is the transmitted torque.

Another disadvantage is that the torque is not always sufficient to prevent the extraction of the tool subjected to high axial forces, especially in the most demanding machining processes.

US2013/328275 discloses a tool holder having a pull-out preventing unit for preventing the tool from being pulled out. The pull-out preventing unit has locking elements, constituted by balls, and locking grooves which receive the balls and interact with them in a positively locking manner. The balls are held by respective threaded pins in their forward position, thus in a position protruding into the inner cavity of the receiver opening. The locking grooves are provided on the tool and are spirally arranged along the cylindrical shank of rotary tools, the direction of pitch of which grooves corresponds to the direction of the grooves of the tool, for axially locking the tool so that the tool should not be axially displaced from the tool holder during operation.

US2017/259347 discloses a hydraulic expansion chuck with a basic body and an expansion bush which is received in the basic body and defines a reception space for a tool to be clamped; a pressure chamber which is delimited between the expansion bush and the basic body. Securing pins extend through the basic body and the expansion bush into the reception space and fix the tool against rotation.

The aim of the present invention is to provide a tool holder device that overcomes the drawbacks of the prior art mentioned above.

Within the scope of this aim, an object of the invention is to provide a tool holder device capable of ensuring simultaneously locking precision, high clamping force, resistance to axial forces, balancing and reduced bulk.

A further object of the invention is to provide a tool holder device that is structurally simple.

A further object of the invention is to provide a tool holder device which, by virtue of its particular constructive characteristics, is capable of giving the greatest assurances of reliability and safety in use.

This aim and these and other objects that will become better apparent hereinafter are achieved by a tool holder device, comprising a chuck which has a first end provided with an attachment member, for fixing to a machine tool, and a second end comprising an axial seat adapted to receive a shank of a tool; said chuck having radial holes at said axial seat; said radial holes receiving respective clamping screws; said radial holes being through holes and in communication with said axial seat so that said clamping screws can be tightened on said shank of the tool inserted in said axial seat; a part of said second end of said chuck directed toward said tool comprising a clamp structure adapted to clamp said shank; said device being characterized in that said shank of said tool comprises notches corresponding to said radial holes and adapted to be engaged by the ends of respective said clamping screws; each of said clamping screws having a radiused conical end.

Further characteristics and advantages will become better apparent from the description of preferred but not exclusive embodiments of the invention, illustrated by way of non-limiting example in the accompanying drawings, wherein:

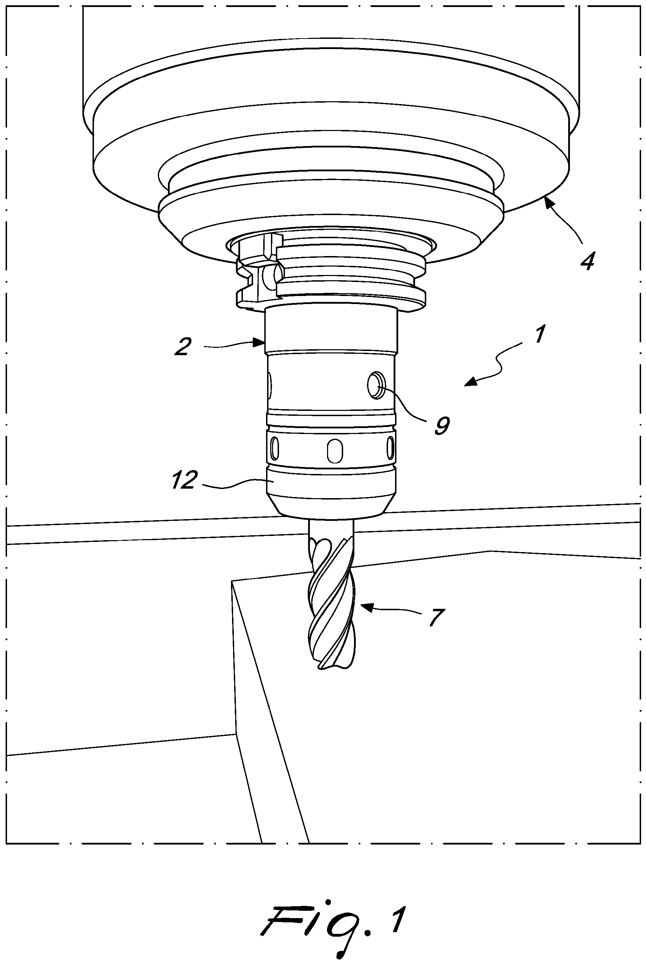

Figure 1 is a perspective view of the tool holder device according to the present invention, shown in use;

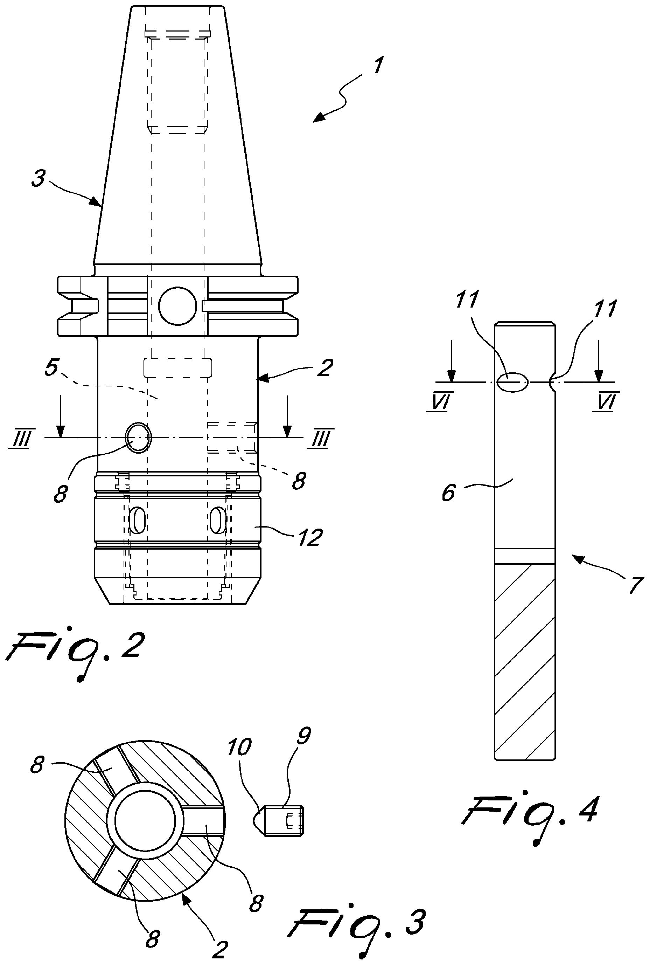

Figure 2 is a side view of the tool holder device according to the invention;
Figure 3 is a partially exploded transverse sectional view, taken along the sectional plane III-III of Figure 2;
Figure 4 is a partially sectional view of a tool;

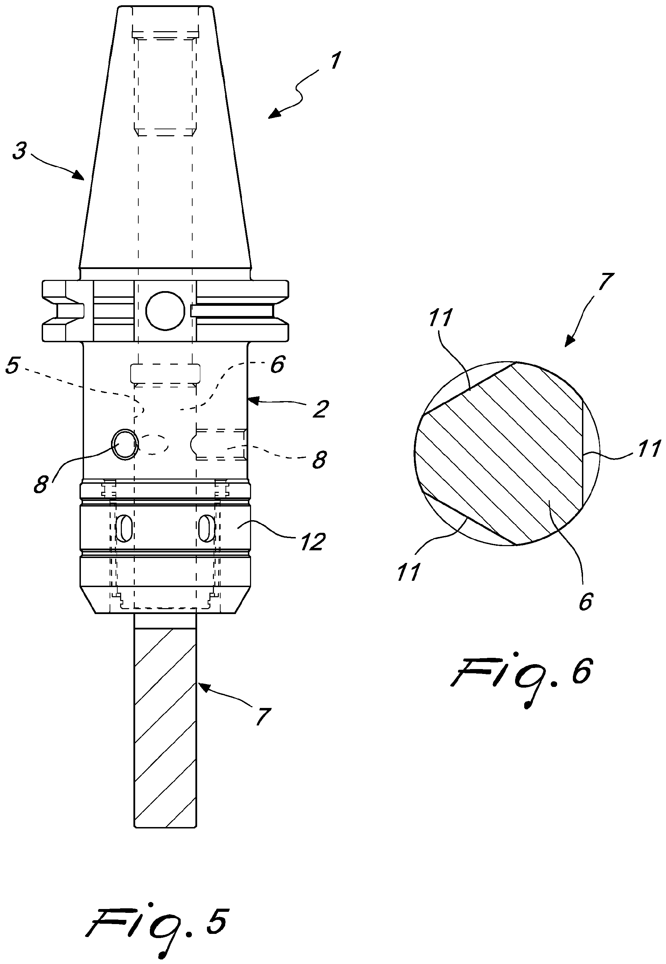

Figure 5 is a side view of the tool holder device, with a clamp with high clamping force, shown with a tool inserted;
Figure 6 is a transverse sectional view of the tool, taken along the sectional plane VI-VI of Figure 4;
Figure 7 is a side view of the tool holder device with elastic clamp, according to a further aspect of the invention, shown with a tool inserted;
Figure 8 is a partially exploded transverse sectional view of the device, taken along the section plane VIII-VIII of Figure 7;
Figure 9 is a partially exploded side view of the elastic clamp device of Figure 7;
Figure 10 is a side view of the tool holder device with hydraulic clamp, according to a further aspect of the invention, shown with a tool inserted;
Figure 11 is a partially exploded transverse sectional view, taken along the sectional plane XI-XI of Figure 10;
Figure 12 is a partially exploded side view of the hydraulic clamp device of Figure 10.

With reference to the cited figures, the tool holder device according to the invention, generally designated by the reference numeral 1, includes a chuck 2 constituted by a metallic body which has a first end provided with an attachment member 3, for fixing to a spindle 4 of a machine, and a second end including an axial seat 5 adapted to receive a shank 6 of a tool 7.

According to the present invention, the chuck 2 has radial holes 8 provided , at the axial seat 5; the radial holes 8 are adapted to receive respective clamping screws 9.

The radial holes 8 are through holes and are therefore in communication with the axial seat 5 so that the clamping screws 9 can be tightened on the shank 6 of the tool 7 inserted in the axial seat 5.

Preferably, the radial holes 8 are three in total and are arranged at 120° to each other.

This allows to have a resistance to the extraction of the tool 7 while maintaining balancing by virtue of the symmetrical arrangement of the clamping screws 9.

Advantageously, the tip 10 of each screw 9 has a radiused conical shape.

The tip 10 of each screw 9 can engage a respective notch 11 formed in the shank 6 of the tool 7.

The tool 7 is therefore provided with three notches 11 arranged at 120° to each other.

The three radiused conical tips 10 of the screws 9 mate with the three notches 11 at 120° provided on the shank 6 of the tool 7, allowing to axially align the tool 7 during the clamping step.

The front part of the chuck 2, i.e., the part of the second end that is directed toward the tool 7, includes a clamp structure 12, which in the specific case is a structure with jaws having a high clamping force with a roller cage, of a per se known type.

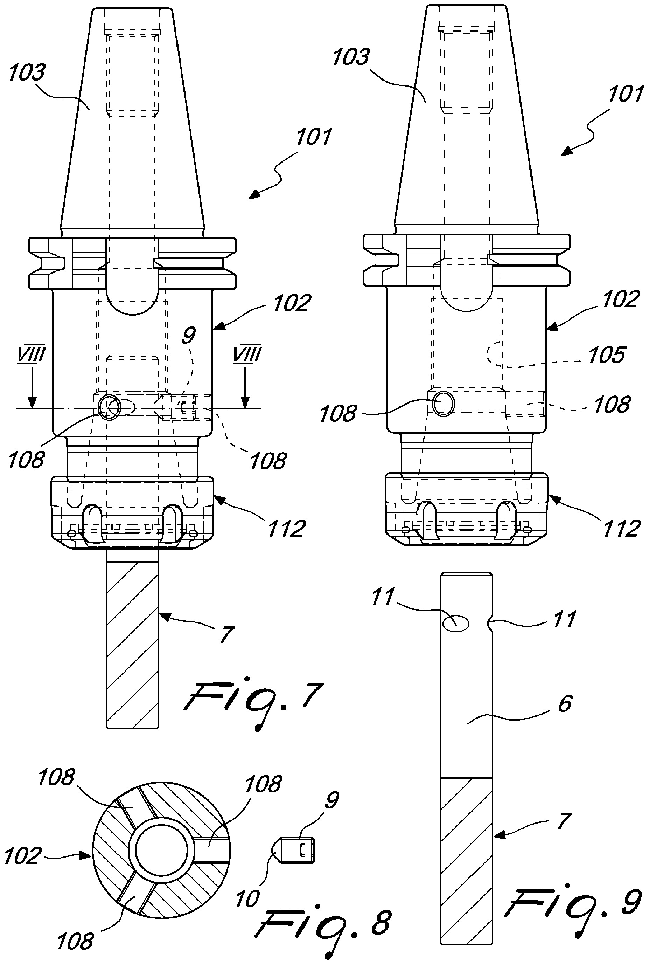

Figures 7-9 show a tool holder device according to a further aspect of the invention, generally designated by the reference numeral 101, and including a chuck 102 constituted by a metallic body which has a first end provided with an attachment member 103, for fixing to a machine tool 4, and a second end including an axial seat 105 adapted to receive the shank 6 of the tool 7.

The chuck 102 has radial holes 108 provided at the axial seat 105; the radial holes 108 are adapted to receive respective clamping screws 9.

The radial holes 108 are through holes and are therefore in communication with the axial seat 105 so that the clamping screws 9 can be tightened on the shank 6 of the tool 7 inserted in the axial seat 105.

Preferably, the radial holes 108 are three in total and are arranged at 120° to each other.

This allows to have a resistance to the extraction of the tool 7 while maintaining balancing by virtue of the symmetrical arrangement of the clamping screws 9.

The front part of the chuck 102, i.e., the part of the second end directed toward the tool 7, includes a clamp structure 112 which in the specific case is an elastic clamp structure, of a per se known type.

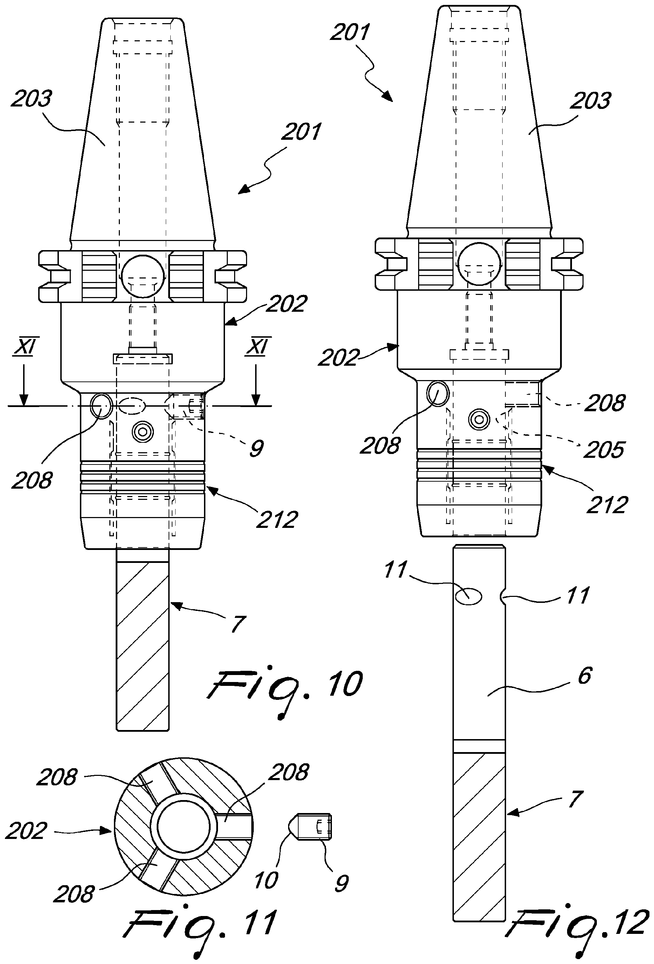

Figures 10-12 show a tool holder device according to a further aspect of the invention, generally designated by the reference numeral 201, and including a chuck 202 constituted by a metallic body which has a first end provided with an attachment member 203, for fastening to a machine tool 4, and a second end including an axial seat 205 adapted to receive the shank 6 of the tool 7.

The chuck 202 has radial holes 208 provided at the axial seat 205; the radial holes 208 are adapted to receive respective clamping screws 9.

The radial holes 208 are through holes and therefore are in communication with the axial seat 205 so that the clamping screws 9 can be tightened onto the shank 6 of the tool 7 inserted in the axial seat 205.

In the specific case, the radial holes 208 are three in total and are arranged at 120° to each other.

This allows to have a resistance to the extraction of the tool 7 while maintaining balancing, by virtue of the symmetrical arrangement of the clamping screws 9.

The front part of the chuck 202, i.e., the part of the second end that is directed toward the tool 7, includes a clamp structure 212, which in the specific case is a hydraulic clamping structure, of a per se known type.

The operation of the tool holder device according to the present invention is as follows.

The tool 7, for example a milling cutter, provided with a shank 6 in which three notches 11 at 120° to each other are formed, is inserted in the axial seat 5, 105, 205 of the chuck 2, 102, 202.

By making the notches 11 of the shank 6 coincide with the respective holes 8, 108, 208 of the chuck, the screws 9 are inserted and tightened on the shank.

The clamp structure 12, 112, 212 is then tightened.

The tool 7 is therefore fixed to the chuck 2 by means of the combination of the two locking systems, where the clamp system 12, 112, 212 is intended for the axial centering of the tool and only marginally for its locking and therefore does not need extreme locking torques, since prevention of the extraction and rotation of the tool is instead assigned to the screws 9.

In practice it has been found that the invention achieves the intended aim and objects, providing a tool holder device which is compact in its dimensions and at the same time extremely effective in keeping the tool in position even when subjected to intense stresses.

The tool holder device according to the present invention is characterized in that it combines, in a single very compact structure, the characteristics of the two systems: chucks with cylindrical attachment member and clamp systems with high clamping torque.

The tool holder device according to the present invention combines all of the following advantages in a single solution: locking precision, high clamping force, resistance to axial forces, balancing and reduced bulk.

The tool holder device according to the present invention is safe and reliable; in fact, in practical resistance tests it has been observed that it is always the tool that breaks, far from the point of attachment to the chuck.

If the tool breaks, the portion attached to the chuck may easily and rapidly extracted by unscrewing the screws 9 and a new tool may be easily and rapidly inserted and locked into working position. This is a distinctive advantage over other prior systems, such the one described in US2013/328275, where the broken part of the tool remains stuck into the chuck and the entire tool holder has to be sent to a specialized maintenance facility in order to replace the threaded pins, that are sealed into the working position because such working position has to precisely calibrated.

A further important advantage of the present invention over the prior art is that the notches 11 are easily and economically formed in the shank 6 of the tool. This is a distinctive advantage over other prior systems, such the one described in US2013/328275, where the tool must be provided with two or four spiral grooves, making the tool more expensive and more difficult to produce.

A further important advantage of the present invention over the prior art is that the three radiused conical tips 10 of the screws 9 mate with the three notches 11 at 120° provided on the shank 6 of the tool 7, and perfectly align the tool 7 even if there are slight errors in the alignment of the notches. This is a distinctive advantage over other prior systems, such the one described in US2013/328275, where the grooves on the tool, the position of the balls and their protruding into the grooves, are all crucial parameters with extremely low tolerances.

A further important advantage of the present invention over the prior art is that the notches 11 have a minimal impact on the size of the surface of the shank which is in contact with the tool holder. This is a distinctive advantage over other prior systems, such the one described in US2013/328275, where the grooves considerably reduce the working area of the surface of the shank.

A further important advantage of the present invention over the prior art is that the notches 11 completely and effectively prevent any even minimal extraction movement of the shank while the spiral grooves of US2013/328275 may allow a small axial motion of the shank of the tool with respect of the tool holder.

In practice, the materials used, as well as the dimensions, may be any according to the requirements and the state of the art.

## Claims

1. A tool holder device, comprising a chuck which has a first end provided with an attachment member, for fixing to a machine tool, and a second end comprising an axial seat adapted to receive a shank of a tool; said chuck having radial holes at said axial seat; said radial holes receiving respective clamping screws; said radial holes being through holes and in communication with said axial seat so that said clamping screws can be tightened on said shank of the tool inserted in said axial seat; a part of said second end of said chuck directed toward said tool comprising a clamp structure adapted to clamp said shank; said device being **characterized in that** said shank of said tool comprises notches corresponding to said radial holes and adapted to be engaged by the ends of respective said clamping screws; each of said clamping screws having a radiused conical end.

2. The device according to claim 1, **characterized in that** said radial holes are three, arranged at 120° to each other; said tool comprising three notches arranged at 120° to each other.

3. The device according to claim 1, **characterized in that** said clamp structure is a structure with high clamping force with a roller cage.

4. The device according to claim 1, **characterized in that** said clamp structure is an elastic clamp structure.

5. The device according to claim 1, **characterized in that** said clamp structure is a structure with hydraulic clamping.
